(19) Europäisches Patentamt / European Patent Office / Office européen des brevets

(11) **EP 4 543 213 B1**

(12) **EUROPEAN PATENT SPECIFICATION**

(45) Date of publication and mention
of the grant of the patent:
**18.02.2026 Bulletin 2026/08**

(21) Application number: **23742413.0**

(22) Date of filing: **23.06.2023**

(51) International Patent Classification (IPC):
*A23C 19/093* (2006.01)    *A23C 13/12* (2006.01)
*A23C 13/14* (2006.01)

(52) Cooperative Patent Classification (CPC):
**A23C 19/093**

(86) International application number:
**PCT/IB2023/056519**

(87) International publication number:
**WO 2023/248197 (28.12.2023 Gazette 2023/52)**

(54) **ANHYDROUS CREAM BASED ON CHEESE AND RELATED PRODUCTION PROCESSES AND USE**

WASSERFREIE SAHNE AUF KÄSEBASIS UND ENTSPRECHENDE VERFAHREN ZUR HERSTELLUNG UND VERWENDUNG

CRÈME ANHYDRE À BASE DE FROMAGE ET PROCÉDÉS CONNEXES DE PRODUCTION ET D'UTILISATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.06.2022 IT 202200013390**

(43) Date of publication of application:
**30.04.2025 Bulletin 2025/18**

(73) Proprietor: **Granarolo S.P.A.**
**40127 Bologna (BO) (IT)**

(72) Inventors:
• **DELLEA, Cristina**
**40127 Bologna (BO) (IT)**
• **ORSI, Carla**
**40127 Bologna (BO) (IT)**
• **DE LAUDE, Luca**
**40127 Bologna (BO) (IT)**
• **FARESE, Donato**
**40127 Bologna (BO) (IT)**

(74) Representative: **Perani & Partners S.p.A.**
**Corso Europa, 15**
**20122 Milano (IT)**

(56) References cited:
CN-A- 111 296 582     US-A- 2 015 256
US-A- 2 015 257     US-A- 2 289 576
US-A- 4 748 041     US-A- 5 356 643

• "GROK - Grokkanti delizie con Grana Panado", 16 May 2011 (2011-05-16), XP055167948, Retrieved from the Internet <URL:http://www.grok.it/en/discover-us/pdf/brochure.pdf> [retrieved on 20150206]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF THE INVENTION

The present invention concerns a process for preparing an anhydrous cream which is stable at room temperature and based on cheese.

### BACKGROUND

The consumption of creams at industrial level has found in recent years an increasing importance to the point of representing the characterizing element of a food product.

The presence or absence of water in a cream allows characterizing technology and the application of the various types of creams known on the market.

A particular type of cream is anhydrous, characterized by a low water content. Anhydrous creams based on only oils or chocolate are particularly used in the confectionery industry.

For an anhydrous cream, the continuous phase is represented by animal and/or vegetable oils and fats, inside which there are the solid particles in suspension with a particle size of average size around 20-30 $\mu$m.

This type of creams is usually produced at temperatures $\leq$ 60°C with machines that produce a high shear stress on the mass, allowing to reduce the size of the particles that are dispersed in the oil phase. The temperature at which the machine works (between 40°C and 60°C) allows the mass to be kept at a certain fluidity.

The anhydrous creams are generally used with baked goods which in turn have relatively low moisture, such as biscuits or related products.

This is because in case of application in combination with moist products, the difference between the values of water activity between product and cream would bring moisture towards the cream with a consequent change in the structure of the cream itself that gets darker and lumpier and the consequent hardening of the "bread" product that would turn dry due to the loss of water that moved towards the cream.

The anhydrous creams are used as spreads in wafers, sandwich biscuits and coextruded biscuits. Some companies also use them in sourdough products, but this after a few days leads to a sudden drop in the softness of the product due to a rapid migration of the water from the dough to the cream. US2015257 discloses a food compound useful as a filling for bakery products, said compound containing not more than about 1% of moisture, comprising: a dry edible fat which is solid at room temperature "such as plastic butter, a comminuted, substantially anhydrous cheese, and a stiffening filler. In the example 37% "Plastic butter", 28% Dry cheese powder, 10% Skim milk powder,25% redried cornstarch are mixed by whipping cold in a Hobart or other suitable type of mixer until a substantially smooth product of uniform texture is obtained.

The technical problem to be solved is to obtain an anhydrous cream, physically stable at room temperature, comprising or consisting of cheese from baking.

### SUMMARY OF THE INVENTION

The Applicant has found that it is possible to obtain an anhydrous cream which is stable at room temperature comprising or consisting of cheese from a baked cheese. Therefore, the object of the present invention is a process for preparing anhydrous cream which is stable at room temperature comprising the following steps:

A. arranging portions of a preparation comprising aged or semi-aged baked cheese or relative mixtures,
B. crushing the aforesaid portions of the aforesaid preparation
C. heating the crushed product from step B at a temperature comprised between 35 °C and 50°C until a semi-liquid mass with a particle size comprised between 14 $\mu$m and 100 $\mu$m is obtained;
D. conducting at least one refining of the semi-liquid mass from step C, and at least one addition of a previously melted anhydrous fat in total amounts comprised between 10% and 49.5%, preferably between 15% and 45% by weight, on the total weight of the mixture comprising the fat and the loaded preparation from step B comprising or consisting of the baked cheese,

wherein both steps C and D being conducted in a refining basin or in a ball mill. The process of the invention provides that both components, baked cheese and anhydrous fat, are heated after mixing.

### DESCRIPTION OF THE DRAWINGS

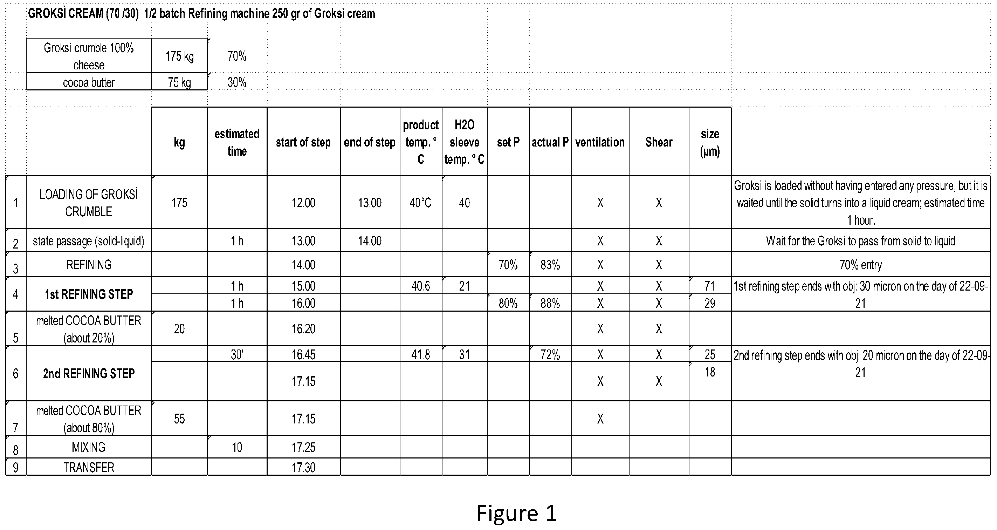

Figures 1-8 show for illustrative purposes in the form of tables the operating conditions used in Examples 1-8.

### DETAILED DESCRIPTION OF THE INVENTION

By stable anhydrous cream is meant a cream that is physically stable at room temperature, i.e. preferably at a temperature comprised between 20°C and 28°C, preferably comprised between 23°C and 25°C. For the purposes of the present invention with the definition of physically stable it is understood that the anhydrous cream does not show degradation or phase separation phenomena at room temperature.

For the purposes of the present invention the definition "comprising" does not exclude the presence of further components/steps beyond those expressly listed after such definition.

The definition "consisting of" excludes the presence of further steps/components in addition to those expressly listed after that definition.

For the purposes of the present invention, the definition of water activity $a_w$ is defined by the following equation

$$a_w = P/P0$$

wherein P is the vapour pressure of water within the product, P0 is instead the vapour pressure of pure water at the same temperature.

*Aged* cheese means a cheese that has undergone an aging process. Aging is an aging phase, which preferably takes place in a period of time ("aging time") ≥ 60 days, preferably comprised between 2 and 24 months, preferably between 2 and 22 months, preferably between 2 and 20 months, preferably between 2 and 18 months, preferably between 2 and 16 months, preferably between 2 and 14 months, preferably between 2 and 12 months. According to a preferred form, the aging time for an aged cheese is comprised between 4 and 24 months, preferably between 4 and 22 months, preferably between 4 and 20 months, preferably between 6 and 18 months, preferably between 6 and 16 months, preferably between 6 and 14 months, preferably between 6 and 12 months.

Examples of aged cheeses are Grana Padano, Parmigiano Reggiano, Provolone. After this aging phase, the amount of water changes, as well as the relative composition of proteins, fats and minerals.

Preferably, the cheese is instead defined as fresh if the aging time is preferably < 30 days.

*Semi*-aged cheese means a cheese that has undergone the aging process in an aging time shorter than that of an aged cheese, preferably the aging time is comprised between 1 and 9 months, preferably between 3 and 8 months.

By *anhydrous* cream is meant a cream with a water content ≤ 5% by weight, preferably ≤ 3% by weight, preferably ≤ 2% by weight, preferably ≤ 1% by weight, preferably < 1% by weight, preferably comprised between 0.01% and 1% by weight, on the total weight of the cream.

Step D. of the process of the invention preferably comprises at least one refining of the semi-liquid material from step C, and at least one addition of a previously melted solid fat or a liquid fat, wherein both said steps C and D are preferably conducted in a refining basin or in a ball mill.

Step D. preferably provides for conducting at least one refining of the semi-liquid mass from step C, and at least one addition of a previously melted solid anhydrous fat or a liquid fat, wherein the at least one previously melted anhydrous fat is in total amounts comprised between 10% and 49.5%, preferably comprised between 15% and 45% by weight, on the total weight of the mixture comprising the fat and the loaded preparation from step B comprising or consisting of the baked cheese, and wherein both steps C and D being conducted in a refining basin or in a ball mill.

Preferably, in steps C and D, the temperature of the at least one refining (or refining temperature) is comprised between 35 °C and 50 °C, preferably between 35 °C and 49 °C, preferably between 35 °C and 48 °C.

The refining basin is a machine capable of pre-refining, mixing, and carrying out conching in a single solution. The interior of the machine has a bulged structure, which together with the work of the blades manages to perform the three actions, normally performed with more complex systems.

"Conching" refers to a technical term used in the technology of the production of creams, for example, of anhydrous chocolate creams. Conching allows to: give plastic consistency to a cream; strongly reduce moisture, viscosity, in particular through the distribution of anhydrous fats used around solid particles; better distribute aromatic fractions (for example, removal of *off-flavors*).

The ball mill is a machine that serves to refine any fat-based suspension with anhydrous ingredients. The ball refiner is a double jacketed cylinder containing a certain amount of steel balls that have the function of refining the product, reducing it into particles with a fineness between 20 $\mu$m and 28 $\mu$m depending on the flow rate of the pump feed, the type of product to be refined, the duration of stay of the product in the grinding chamber and the fineness that is desired to be obtained.

By anhydrous fat is meant a fat which contains substantially no water, it preferably contains an amount of water ≤ 1% by weight, preferably ≤ 0.5% by weight, preferably ≤ 0.2% by weight, preferably ≥ 0.001% and ≤ 0.5% by weight, preferably ≥ 0.001% and ≤ 0.2% by weight; it preferably contains a minimum percentage of fat equal to about 99.8%.

In both cases, the process according to the present invention preferably comprises the following steps:

C the crushed material from step B is loaded in said refining basin or ball mill and possibly also a part of liquid fat or previously melted fat at a temperature preferably comprised between 35 °C and 50 °C, preferably between 36 °C and 48 °C, again preferably between 38 °C and 45 °C and said material is ground until a semi-liquid material with a particle size comprised between 14 and 100 $\mu$m is obtained,

D-1 a first refining is performed at a temperature comprised in the range of step C, on the semi-liquid material (or mass) of step C;

D-2 the anhydrous fat in liquid or previously melted form is added at a temperature comprised in the range of the two previous steps,

D-3 a second refining step is performed at a temperature comprised in the range of the previous steps;

D-4 the remaining part of fat is added in whole or in part, when the fat is partially added in step D-2;

D-5 proceeding with a third refining step if steps D-6 and D7 are envisaged; or mixing in case all the remaining fat is added in step D-4;

D-6 the remaining part of fat is added in whole if the fat was partially added in step D-4;

D-7 proceeding with a fourth refining if step D6 is envisaged,

D-8 the anhydrous cream is unloaded.

It should be noted that preferably the fat is liquid or is previously melted at a temperature comprised between 60 °C and 70 °C, preferably by means of a water bath.

By anhydrous cream obtained by the process of the invention is meant a compound which, physically speaking, is characterized by a fluid or semi-solid consistency, and is for food use; it is preferably characterized by high spreadability, in the sense that it can be spread on a food surface, or it can constitute the filling of another food product.

The anhydrous cream obtained with the process of the invention is preferably characterized by a viscosity comprised between 25,000 and 30,000 cP. This viscosity was measured at a temperature comprised between 36 °C and 48 °C, preferably by a Brookfield viscometer (model DV3TLVTJ0).

The anhydrous cream preferably has a particle size comprised between 15 and 25 $\mu$m. For the purposes of the present invention, the particle size is measured directly on the material, for example on the cream or suspension, preferably by means of a digital micrometre (for example, "Beslands Digital Micrometre 0-25 mm, Electronic External Digital Caliber LCD, High Precision Millesimal Professional Micrometre) by making three measurements.

According to a preferred form of the process of the invention reported above, when steps C and D are conducted in the refining basin and the fat contained in the final cream is comprised between 15% and 35% by weight on the total weight, this process comprises steps C, D1-D5 and D8.

In this case, in step C, the crushed product is heated at a temperature comprised between 38 °C and 45 °C, preferably between 39 °C and 43 °C and for a period comprised between 40 and 90 minutes, preferably 1 hour until a semi-liquid product with a particle size comprised between 60 $\mu$m and 80 $\mu$m is obtained.

In step D-1 the material obtained in step C at the temperature comprised in the range of step C is subjected to a first refining for a time comprised between 50 and 70 minutes, preferably for about 1 hour, at a pressure comprised between 60% and 90%, preferably 70% of the maximum pressure of the refining basin.

In step D-2, the liquid or melted fat is partially added to the semi-liquid material of the previous step at a temperature comprised in the range of the previous steps at a pressure comprised between 75% and 90%, preferably 80%, of the maximum pressure.

In step D-3, the mixture of step D-2 is subjected to a second refining conducted at a temperature comprised in the range of the previous steps at a pressure comprised between 75% and 90%, preferably 80% of the maximum pressure and for a time comprised between 10 and 40 minutes, preferably between 15 and 30 minutes;

In step D-4, the remaining amount of liquid fat or melted fat not added in step D2 is added completely at a temperature comprised in the range of the previous steps and at the same pressure as in step D-3;

In step D-5, proceeding with a mixing at a temperature comprised in the range of the previous steps and at the same pressure as the previous step.

According to another preferred form of the process, when steps C and D are carried out in a ball mill, and the cream to be obtained contains between 25% and 35% anhydrous fat, this process comprises steps C, D-1 - D-3 and D-8.

In this case, in step C, the crushed material from step B is loaded at a stirring speed comprised between 30 Hz and 40 Hz at a temperature comprised between 37 °C and 45 °C, preferably between 40 °C and 43 °C for a time comprised between 40 and 90 minutes, preferably for about 1 hour, until a semi-liquid material with a particle size comprised between 24 $\mu$m and 26 $\mu$m is obtained.

In step D-1, the refining is conducted at a temperature comprised in the range of step C with a stirring speed of 60 Hz for a time comprised between 40 and 90 minutes, preferably for 60 minutes.

In step D-2, all the anhydrous fat is added at the temperature comprised in the range of the previous steps and at a stirring speed of 30 Hz.

In step D-3, the refining is conducted at the same temperature as the previous steps at a stirring speed of 60 Hz for a time comprised between 10 and 20 minutes until a cream with a particle size comprised between 18 $\mu$m and 20 $\mu$m is obtained.

According to another preferred form, when steps C and D are conducted in a ball mill and the cream contains between 35% and 45% by weight of anhydrous fat on the total weight, the process comprises steps C, D-1 - D-8.

In this case, in step C, a part of fat is added in addition to the crushed material from B, heated at a temperature comprised between 37 °C and 45 °C, preferably between 39 °C and 43 °C, and the mixture is kept stirring at a speed comprised between 30 Hz and 40 Hz, until a semi-liquid product or material with a particle size comprised between 40 $\mu$m and 60 $\mu$m is obtained.

In step D-1, the first refining step is conducted at a temperature comprised in the same range as step C, at a stirring speed comprised between 50 Hz and 70 Hz, preferably at 60 Hz, for a time comprised between 10 and 40 minutes, preferably 30 minutes.

In step D-2, a further part of fat is added at a temperature comprised the aforesaid range and at a speed comprised between 30 Hz and 40 Hz, preferably 30 Hz.

In step D-3, the second refining is conducted at a temperature comprised in the aforesaid range, at a stirring speed comprised between 50 Hz and 70 Hz, preferably at 60 Hz.

In step D-4, a further part of fat is added at a temperature comprised in the range of the previous steps and at a speed comprised between 30 Hz and 40 Hz, preferably 30 Hz.

In step D-5, the third refining is conducted at a temperature comprised in the range of the previous steps and the stirring mixture is maintained at a speed comprised between 50 Hz and 70 Hz, preferably 60 Hz.

In step D-6, the last portion of fat is added at a temperature comprised in the range of the previous steps and at a speed comprised between 30 Hz and 40 Hz, preferably 30 Hz.

In step D-7, proceeding with the fourth refining at a temperature comprised in the range of the previous steps and at a speed comprised between 50 Hz and 70 Hz, preferably 60 Hz for a time comprised between 5 and 15 minutes, until a cream having a particle size comprised between 20 $\mu$m and 25 $\mu$m is obtained.

According to another preferred form of the process of the invention, when steps C and D are carried out in a ball mill to obtain a final cream containing the anhydrous fat in amounts including 20% and 30% by weight on the total weight of the cream, the process comprises steps C, D-1, D-2, D-3, D-8.

In this case, in step C, the crushed product from step B is loaded, and heated at a temperature comprised between 39 °C and 48 °C, preferably between 41 °C and 45 °C, at a stirring speed comprised between 30 Hz and 40 Hz, for a time comprised between 40 and 90 minutes, preferably 60 minutes, until a semi-liquid product with a particle size comprised between 24 $\mu$m and 26 $\mu$m is obtained.

In step D-1, the refining is conducted at a temperature comprised in the same range as step C, and at a speed comprised between 50 Hz and 70 Hz, preferably at 60 Hz, for a time comprised between 20 and 90 minutes, preferably between 30 and 60 minutes.

Step D-2 includes the following operating steps:

a) addition of melted or liquid anhydrous fat at a temperature comprised in the range of the previous steps at a speed comprised between 30 Hz and 40 Hz, preferably 30 Hz;
b) mixing at a temperature comprised in the range of the previous step at a speed of 60 Hz;
c) addition of buttermilk powder at a temperature comprised in the range of the previous steps at a speed comprised between 30 Hz and 40 Hz, preferably 30 Hz;
d) mixing at a temperature comprised in the range of the previous step at a speed of 60 Hz;
e) addition of cheese powder at a temperature comprised in the range of the previous steps at a speed comprised between 30 Hz and 40 Hz, preferably 30 Hz.

In step D-3, the refining is conducted at a temperature comprised in the range of the previous step, at a speed of 60 Hz, for a time comprised between 10 and 30 minutes, preferably 20 minutes, until a product with a particle size comprised between 18 $\mu$m and 20 $\mu$m is obtained.

Preferably, the preparation of step A is selected from:

i. baked cheese comprising or consisting of: aged and/or semi-aged cheese, Grana Padano, preferably Grana Padano PDO, Parmigiano Reggiano, preferably Parmigiano Reggiano PDO, Cheddar and mixtures thereof, or
ii. baked cheese comprising or consisting of: aged and/or semi-aged cheese, Grana Padano, preferably Grana Padano PDO, Parmigiano Reggiano, preferably Parmigiano Reggiano PDO, Cheddar, and at least one of the following components chosen from grain flour, starches, legume flours, protein extrusions.

Preferably, the baked cheese is aged and/or semi-aged cheese and comprises or is selected from the group consisting of: Grana Padano, preferably PDO, Parmigiano Reggiano, preferably PDO, Cheddar, and mixtures of the foregoing.

Preferably, the baked cheese is present in an amount ≥50% by weight, preferably comprised between 50% and 80% by weight, preferably between 50% and 75% by weight, on the total weight of the anhydrous cream finished product.

Preferably, when the preparation is of type ii), it contains as grain flour corn flour in amounts comprised between 15% and 25% by weight on the total weight of the preparation ii).

Preferably, the baked cheese used in step A is in the form of pods, and is prepared according to the process described in EP1614355B1 and is commercially available under the trademark Groksi®.

The preparation from the crushing step B has a particle size less than 6 mm, preferably comprised between 3 mm and 5 mm, more preferably between 4 mm and 5 mm, moisture comprised between 1.5% and 3.5%, water activity comprised between 0.20 and 0.40, density comprised between 390 and 490 g/l.

The anhydrous cream preferably has a viscosity comprised between 25,000 and 30,000 cP. This viscosity is measured at a temperature comprised between 36 °C and 48 °C with Brookfield viscometer (model DV3TLVTJ0). Preferably, the anhydrous cream has a particle size comprised between 15 μm and 25 μm.

The anhydrous cream contains anhydrous fat in an amount comprised between 10% and 49.5% by weight, preferably between 15% and 49.5% by weight, preferably between 20% and 49.5%, preferably between 20% and 45% by weight, preferably between 22% and 45% by weight, preferably between 22% and 40% by weight on the total weight of the anhydrous cream; according to a preferred form, the anhydrous fat is comprised between 15% and 45% by weight, even more preferably between 35% and 45% by weight on the total weight of the cream.

The anhydrous cream according to the present invention may contain at least one other component selected from grain flour, starches, legume flours, protein extrusions, preferably in amounts comprised between 15% and 25% by weight on the total weight of the anhydrous cream.

The anhydrous fats employed are preferably selected from anhydrous butter, a vegetable oil or fat selected from cocoa butter, palm oil, sunflower oil, a mixture of vegetable oils and fats comprising high oleic sunflower oil and cocoa butter with melting point preferably between 32 °C and 39 °C, or a mixture of vegetable oils and fats comprising high oleic sunflower oil and cocoa butter with melting point preferably between 38 °C and 42 °C.

By anhydrous butter is meant a butter substantially free of water, it preferably contains an amount of water ≤ 1% by weight, preferably ≤ 0.5% by weight, preferably ≤ 0.2% by weight, preferably ≥ 0.001% and ≤ 0.5% by weight, preferably ≥ 0.001% and ≤ 0.2% by weight; it contains a minimum fat percentage equal to about 99.8%. The anhydrous butter is obtained from cream concentrated at 99% fats, without the step of removal of water (which step is instead necessary for the process of obtaining clarified butter).

According to a particularly preferred solution, mixtures of anhydrous vegetable oils and fats are used for such use and in particular in a form of a single solution prepared (commercial *"ready to use"* products).

Still preferably, vegetable fats and/or mixtures of vegetable fats having melting points comprised between 37 °C and 45 °C, preferably between 40 °C and 42 °C, are employed.

The anhydrous cream obtained with the process of the invention may be arranged in pots or containers to be commercially available.

Alternatively, the anhydrous cream of the invention can be applied, preferably as a coating, on food products, preferably salted ones, and/or snacks, - for example: wafers, crackers, biscuits, corn or protein extrusions, popcorn - as specified below.

In this case, the process of the invention comprises a further step E, wherein the cream from step D is applied on substrates comprising or consisting of:

    1. Wafer balls or crack wafers comprising: soft wheat flour, wheat starch, sugar, salt, rye sourdough, raising agents: sodium hydrogen carbonate (E500ii), ammonium hydrogen carbonate (E503ii).

    2. Malt cracks or malted crispy cereals comprising as ingredients: soft wheat flour, sugar, malt flour, wheat starch, barley malt extract, skimmed milk powder, salt).

    3. Crack biscuits or cereals biscuits comprising as ingredients: wheat flour, wheat gluten, sugar, malt flour, raising agent: sodium hydrogen carbonate (E 500ii))

    4. corn or maize based extruded comprising as ingredients: corn flour, corn bran, sunflower lecithin (emulsifier);

    5. protein extrusions comprising the following ingredients: soy protein, pea protein, chickpea protein, soybean flour, chickpea flour, pea flour, semolina or grain flour, starches, salt, natural flavourings;

    6. popcorn.

Step E of the process of the invention intended for coating the above-mentioned coated substrates 1-6 of coated with the cream of the invention is preferably conducted in a basin and comprises the following steps:

    a) Manually loading said substrates 1-6 into the basin;
    b) Application by spraying on the substrates 1-6 of the anhydrous cream at a temperature comprised between 42 °C and 45 °C by means of nozzles inside the basin kept under rotary stirring;
    c) Drying/cooling with cold air (10 °C-15 °C) keeping the basin under rotary stirring;
    d) Repetition of step b);
    e) Eventual addition of other powdered ingredients: such as powdered cheese; powder flavours and other powdered dairy products;
    f) Repetition of step c);
    g) Manual unloading of the final product from the basin of the product covered with the cheese anhydrous cream.

**EXAMPLES**

The following examples (with the exception of example 2) are given for illustrative purposes of the process for preparing the anhydrous cream according to the present invention.

**Example 1** - Preparation of anhydrous cream using 70% of crushed cooked cheese (crumble Groksì®) and 30% of cocoa butter in refining basin

Figure 1 shows the operating conditions for preparing an anhydrous cream consisting of 70% of cheese at 100% and 30% cocoa butter in the refining basin from 175 kg of crushed pods with cheese at 100% (Crumble Groksì®) and 75 kg of cocoa butter. The cream obtained has a particle size of 18 μm.

**Example 2** - Preparation of anhydrous cream using 70% of crushed cooked cheese (crumble Groksì®) and 30% of palm oil in refining basin.

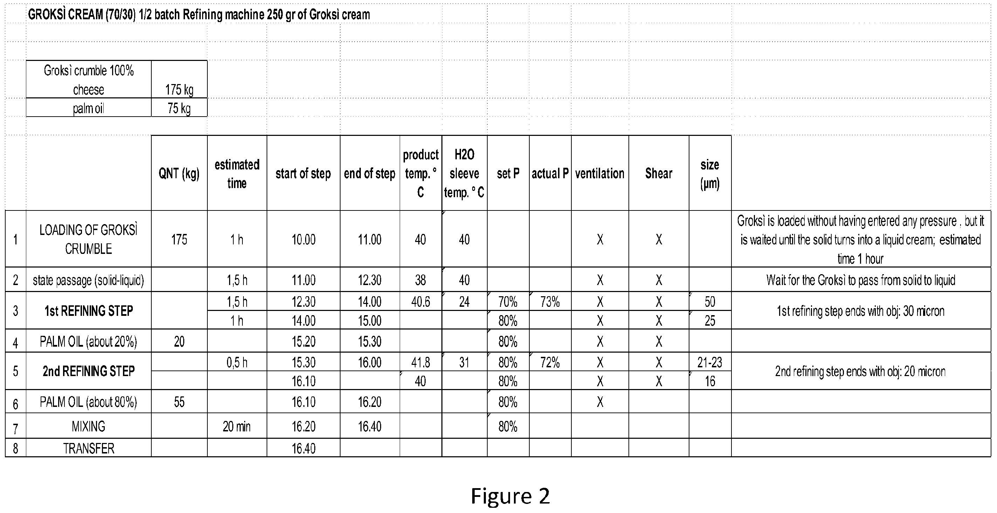

Figure 2 shows the operating conditions for preparing an anhydrous cream consisting of 70% of cheese at 100% and 30% palm oil in the refining basin from 175 kg of crushed pods with cheese at 100% (Crumble Groksì®) and 75 kg of palm oil. The cream obtained has a particle size of 16 μm.

**Example 3** - Preparation of anhydrous cream using 70% of crushed cooked cheese (crumble Groksì®) and 30% of cocoa butter in ball mill.

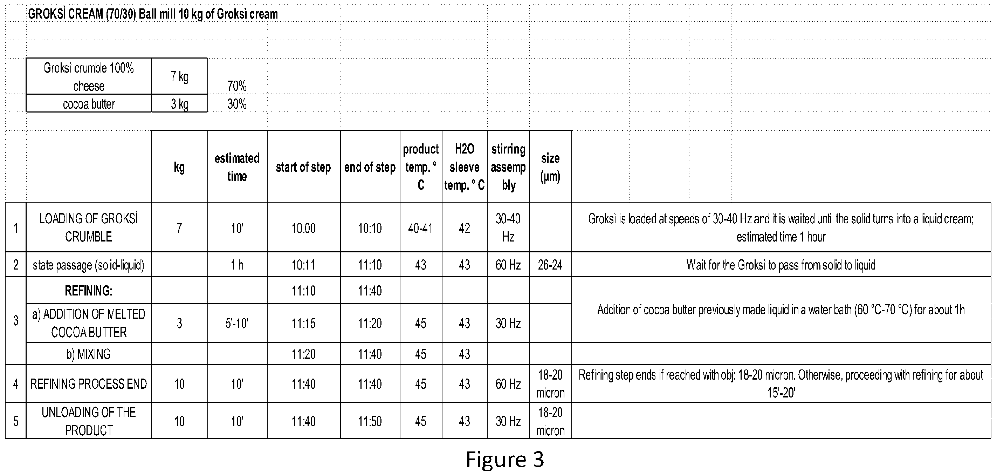

Figure 3 shows the operating conditions in a ball mill for preparing an anhydrous cream consisting of 70% of cheese at 100%, and 30% of cocoa butter in a ball mill, from 7 kg of crushed pods with cheese at 100% (Crumble Groksì®) and 3 kg of cocoa butter. The cream obtained has a particle size comprised between 18 and 20 μm.

**Example 4** - Preparation of anhydrous cream using 70% of crushed cooked cheese (crumble Groksì®) and 30% of anhydrous butter in ball mill.

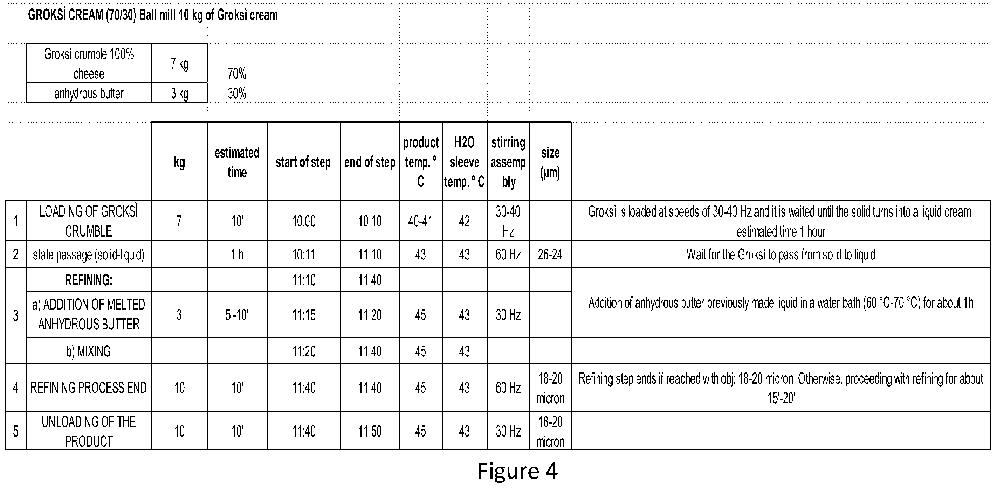

Figure 4 shows the operating conditions in a ball mill for preparing an anhydrous cream consisting of 70% of cheese at 100% and 30% of anhydrous butter in a ball mill from 7 kg of crushed pods with cheese at 100% (Crumble Groksì®) and 3 kg of anhydrous butter. The cream obtained has a particle size comprised between 18 and 20 μm.

**Example 5** - Preparation of anhydrous cream using 60% of crushed pods consisting of 75% of cooked cheese and 25% of corn flour (crumble Groksì®) and 40% of cocoa butter in a ball mill.

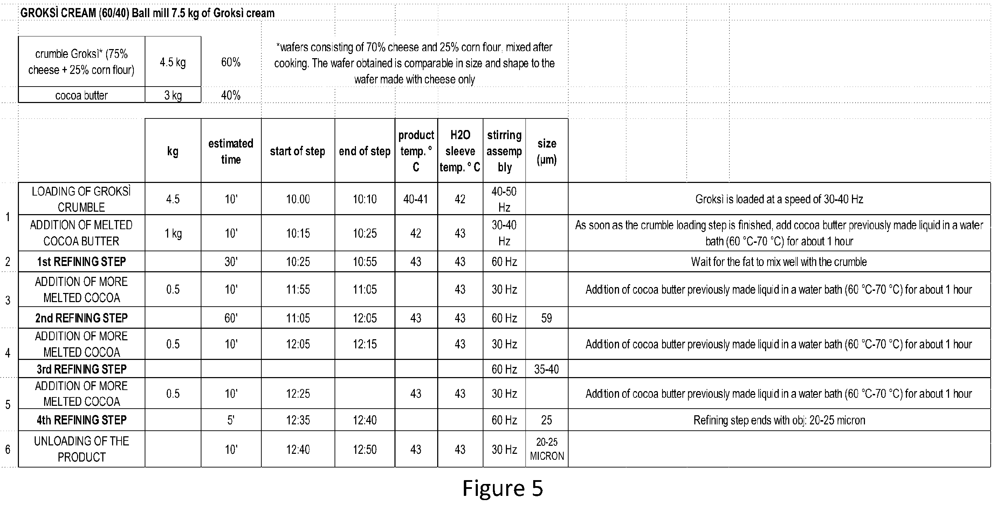

Figure 5 shows the operating conditions in a ball mill for preparing an anhydrous cream consisting of 60% of a 75% cheese mixture and 25% of corn flour and for 40% of cocoa butter in a ball mill from 4.5 kg of pods consisting of pods formed by 75% cheese and 25% of crushed corn flour (Crumble Groksì®) and 3 kg of cocoa butter. The cream obtained has a particle size comprised between 20 μm and 25 μm.

**Example 6** - Preparation of anhydrous cream using 60% of crushed cooked cheese (crumble Groksì®), 27% of vegetable fat, 10% of buttermilk powder and 3% of cheese powder, in a ball mill.

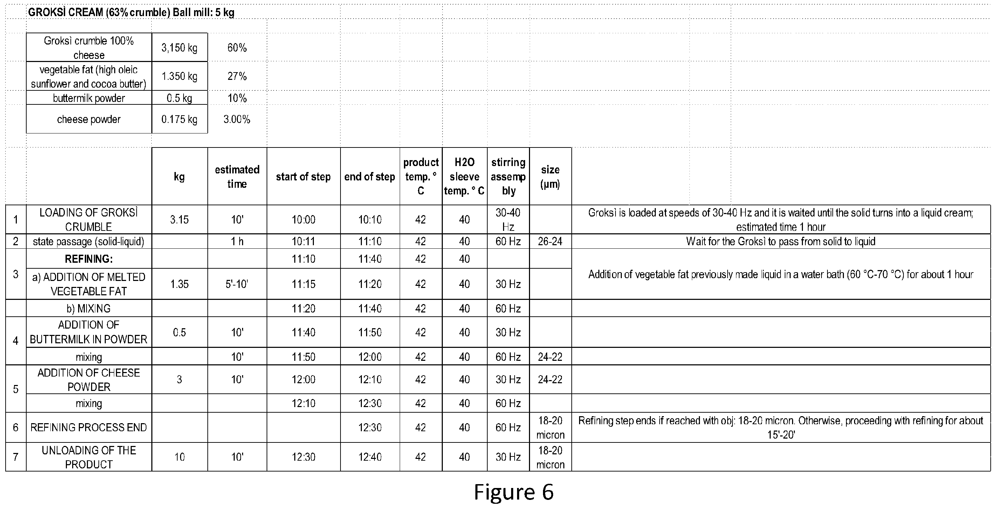

Figure 6 shows the operating conditions in a ball mill for preparing an anhydrous cream in a ball mill using 3.15 kg of crushed pods with cheese at 100% (Crumble Groksi) and 1.35 kg of vegetable fat (high oleic sunflower and cocoa butter) buttermilk powder 0.5 kg and 0.175 kg of cheese powder. The cream obtained has a particle size comprised between 18 μm and 20 μm.

**Example 7** - Preparation of anhydrous cream using 51% of crushed cooked cheese (crumble Groksì®), 26% of vegetable fat, 8% of buttermilk powder and 15% of cheese powder, in a ball mill.

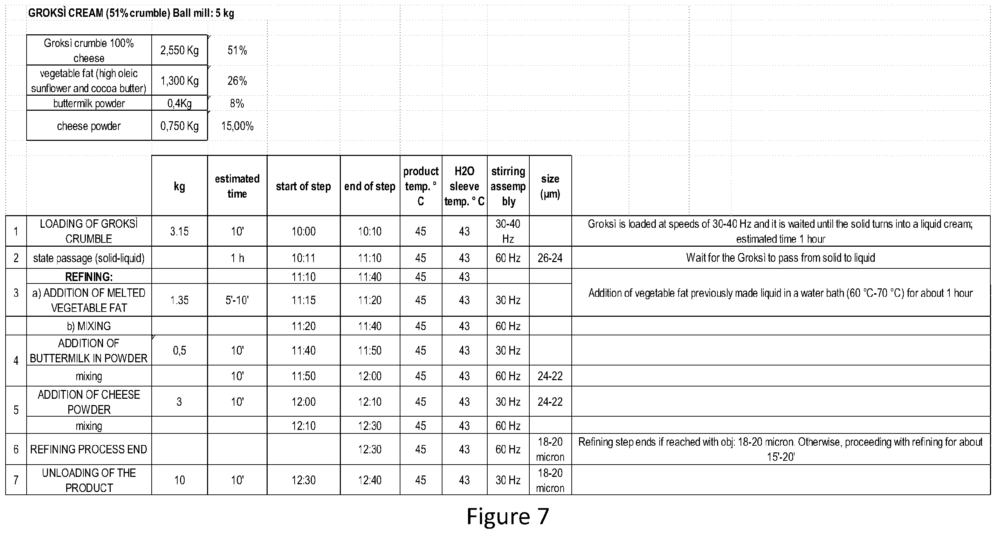

Figure 7 shows the operating conditions in a ball mill for preparing an anhydrous cream in a ball mill using 2.55 kg of crushed pods with cheese at 100% (Crumble Groksì®) and 1.30 kg of vegetable fat (high oleic sunflower and cocoa butter), buttermilk powder 0.4 kg and 0.75 kg of cheese powder. The cream obtained has a particle size comprised between 18 μm and 20 μm.

**Example 8** - Preparation of anhydrous cream using 53% of crushed cooked cheese (crumble Groksì®), 22% of vegetable fat, 8% of buttermilk powder and 17% of cheese powder, in a ball mill.

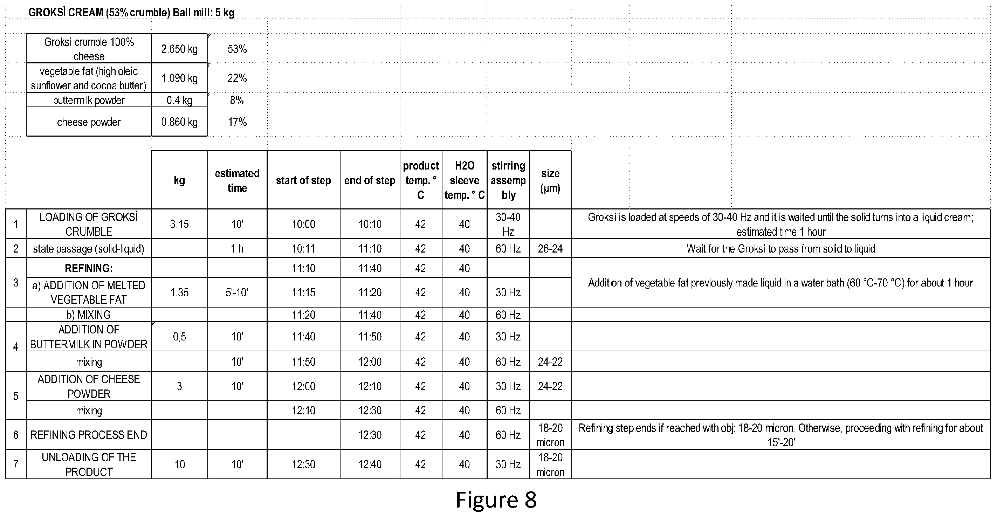

Figure 8 shows the operating conditions for preparing an anhydrous cream in a ball mill using 2.65 kg of crushed pods with cheese at 100% (Crumble Groksi) and 1.09 kg of vegetable fat (high oleic sunflower and cocoa butter) buttermilk powder 0.4 kg and 0.86 kg of cheese powder. The cream obtained has a particle size comprised between 18 μm and 20 μm.

**Claims**

1. Process for preparing an anhydrous cream which is stable at room temperature, comprising or consisting of cheese and anhydrous fat, comprising the following steps:

    A. arranging portions of a preparation comprising aged or semi-aged baked cheese or relative mixtures,
    B. crushing the aforesaid portions of the aforesaid preparation,
    C. heating the crushed product from step B at a temperature comprised between 35 °C and 50 °C, preferably between 36 °C and 48 °C, until a semi-liquid mass with a particle size comprised between 14 μm and 100 μm is obtained, preferably between 24 μm and 100 μm,

D. conducting at least one refining of the semi-liquid mass from step C, and at least one addition of a previously melted anhydrous fat in total amounts comprised between 10% and 49.5%, preferably between 15% and 45% by weight, on the total weight of the mixture comprising the fat and the loaded preparation from step B comprising or consisting of the baked cheese,

wherein both steps C and D being conducted in a refining basin or in a ball mill.

2. Process according to claim 1, wherein steps C and D are conducted according to the following operating modes:

C the crushed material from step B. is loaded in said refining basin or ball mill and eventually also a part of liquid fat or previously melted fat at a temperature comprised between 36 °C and 48 °C, and said material is grounded until a semi-liquid material with a particle size comprised between 14 $\mu$m and 100 $\mu$m is obtained, preferably between 24 $\mu$m and 100 $\mu$m

D-1 a first refining is performed at a temperature comprised in the range of step C, on the semi-liquid material of step C.

D-2 the anhydrous fat in liquid or previously melted form is partially or completely added, at a temperature comprised in the range of the two previous steps;

D-3 a second refining step is performed, at a temperature comprised in the range of the previous steps;

D-4 the remaining part of fat is partially or completely added, when the fat is partially added in step D2;

D-5 proceeding with a third refining step, if steps D6 and D-7 are envisaged; or mixing in case all the remaining fat is added in step D4;

D-6 if the fat was partially added in step D-4, the remaining part of fat is completely added;

D-7 proceeding with a fourth refining if step D6 is envisaged,

D-8 the anhydrous cream is unloaded.

3. Process according to claim 2, wherein steps C and D are performed in a refining basin, the final cream has an amount of fat comprised between 20% to 35% by weight on the total weight of the mixture to be refined, and the process comprises steps C, D1-D5 and D8, wherein:

• in step C, the crushed product is heated at a temperature comprised between 38 °C and 45 °C, preferably between 39 °C and 43 °C, and is kept stirring for a time comprised between 40 and 90 minutes, preferably 1 hour, until a semi-liquid product or mass with a particle size comprised between 60 $\mu$m and 80 $\mu$m is obtained;

• in step D-1, the material obtained in step C at the temperature comprised in the range of step C is subjected to a first refining, for a time comprised between 50 and 70 minutes, preferably for about 1 hour, at a pressure comprised between 60% and 90%, preferably 70% of the maximum pressure of the refining basin;

• in step D-2, the liquid or melted fat is partially added to the semi-liquid material of the previous step, at a temperature comprised in the range of the previous steps, at a pressure comprised between 75% and 90%, preferably 80% of the maximum pressure;

• in step D-3, the mixture of step D-2 is subjected to a second refining, conducted at a temperature comprised in the range of the previous steps at a pressure comprised between 75% and 90% of the maximum pressure, for a time comprised between 10 and 40 minutes, preferably comprised between 15 and 30 minutes;

• in step D-4, the remaining amount of liquid fat or melted fat not added in step D2 is added completely, at a temperature comprised in the range of the previous steps, and at the same pressure as in step D-3;

• in step D-5, proceeding with a mixing at a temperature comprised in the range of the previous steps, and at the same pressure as the previous step.

4. Process according to claim 2, wherein steps C and D are conducted in a ball mill and the final cream comprises anhydrous fat in amounts comprised between 25% and 35%, the process comprises steps C, D-1 - D-3 and D-8 wherein:

• in step C, the crushed material from step B. is loaded at a stirring speed comprised between 30 Hz and 40 Hz, at a temperature comprised between 37°C and 45°C, preferably between 40°C and 43°C, for a time comprised between 40 and 90 minutes, preferably for about 1 hour, until a semi-liquid mass with a particle size between 24 $\mu$m and 26 $\mu$m is obtained;

• in step D-1, the refining is conducted at a temperature comprised in the range of step C, with a stirring speed of 60 Hz, for a time comprised between 40 and 90 minutes, preferably for 60 minutes;

• in step D-2, all the anhydrous fat is added at the temperature comprised in the range of the previous steps, and at a stirring speed of 30 Hz;

• in step D-3, the refining is conducted at the same temperature as the previous steps, at a stirring speed of 60 Hz, for a time comprised between 10 and 20 minutes, until a cream with a particle size comprised between 18 μm and 20 μm is obtained.

5. Process according to claim 2, wherein, when steps C and D are conducted in a ball mill and the cream contains between 35% and 45% by weight of anhydrous fat on the total weight, the process comprises steps C, D-1 - D-8 wherein:

> • in step C, a part of fat is added in addition to the crushed material from B, heated at a temperature comprised between 37 °C and 45 °C, preferably at a temperature comprised between 39 °C and 43 °C, and the mixture is kept stirring at a speed comprised between 30 Hz and 40 Hz, until a semi-liquid product or mass with a particle size comprised between 40 μm and 60 μm is obtained;
> • in step D-1, the first refining step is conducted at a temperature comprised in the same range as step C, at a stirring speed comprised between 50 Hz and 70 Hz, preferably at 60 Hz, for a time comprised between 10 and 40 minutes, preferably 30 minutes;
> • in step D-2, a further part of fat is added at a temperature comprised in the same range as step D1, and at a speed comprised between 30 Hz and 40 Hz, preferably 30 Hz;
> • in step D-3, the second refining is conducted at a temperature comprised in the aforesaid range, at a stirring speed comprised between 50 Hz and 70 Hz, preferably at 60 Hz;
> • in step D-4, a further part of fat is added at a temperature comprised in the range of the previous steps, and at a speed comprised between 30 Hz and 40 Hz, preferably 30 Hz;
> • in step D-5, the third refining is conducted at a temperature comprised in the range of the previous steps, and the stirring mixture is maintained at a speed comprised between 50 Hz and 70 Hz, preferably 60 Hz;
> • in step D-6, the last portion of fat is added at a temperature comprised in the range of the previous steps, and at a speed comprised between 30 Hz and 40 Hz, preferably 30 Hz;
> • in step D-7, proceeding with the fourth refining at a temperature comprised in the range of the previous steps, and at a speed comprised between 50 Hz and 70 Hz, preferably 60 Hz, for a time comprised between 5 and 15 minutes until a cream having a particle size comprised between 20 μm and 25 μm is obtained.

6. Process according to claim 2, for preparing a cream containing the anhydrous fat in a concentration between 20% and 30%, steps C and D are conducted in a ball mill, comprising steps C, D-1, D-2, D-3, D-8, wherein

> • in step C, the crushed product from step B is loaded and heated at a temperature comprised between 39 °C and 48 °C, preferably between 41 °C and 45 °C, at a stirring speed comprised between 30 Hz and 40 Hz, for a time comprised between 40 and 90 minutes, preferably 60 minutes, until a semi-liquid product with a particle size comprised between 24 μm and 26 μm is obtained;
> • in step D-1, the refining is conducted at a temperature comprised in the same range as step C, and at a speed comprised between 50 Hz and 70 Hz, preferably at 60 Hz, for a time comprised between 20 and 90 minutes, preferably between 30 and 60 minutes;
> • step D-2 includes the following operating steps
>
>> a) addition of melted or liquid anhydrous fat at a temperature comprised in the range of the previous steps at a speed comprised between 30 Hz and 40 Hz, preferably 30 Hz,
>> b) mixing at a temperature comprised in the range of the previous step, at a speed of 60 Hz;
>> c) addition of buttermilk powder at a temperature comprised in the range of the previous steps, at a speed comprised between 30 Hz and 40 Hz, preferably 30 Hz,
>> d) mixing at a temperature comprised in the range of the previous step, at a speed of 60 Hz;
>> e) addition of cheese powder at a temperature comprised in the range of the previous steps, at a speed comprised between 30 Hz and 40 Hz, preferably 30 Hz,
>
> • in step D-3, the refining is conducted at a temperature comprised in the range of the previous step, at a speed of 60 Hz, for a time comprised between 10 and 30 minutes, preferably 20 minutes, until a product with a particle size comprised between 18 μm and 20 μm is obtained.

7. Process according to any one of claims 1-6, wherein the preparation of step A comprises or consists of:

> i. baked cheese comprising or consisting of: aged or/and semi-aged cheese, Grana Padano, Parmigiano Reggiano, Cheddar and relative mixtures, or
> ii. baked cheese comprising or consisting of: aged and/or semi-aged cheese, Grana Padano, Parmigiano Reggiano, Cheddar, relative mixtures, and at least one of the following components selected from grain flour, starches, legume flours, protein extrusions, preferably in amounts comprised between 15% and 25% by weight on the total weight of preparation ii.

8. Process according to claim 7, wherein the preparation ii. contains corn flour as grain flour and is preferably present in amounts comprised between 10% and 25% by weight on the total weight of preparation ii.

9. Process according to any one of claims 1-8, wherein the baked cheese used in the preparation of step A is in the form of pods.

10. Process according to any one of claims 1-9, wherein the product obtained after the crushing step B has a particle size less than 6 mm, preferably between 3 mm and 6 mm, more preferably between 4 mm and 5 mm; moisture comprised between 1.5% and 3.5%; water activity comprised between 0.20 and 0.40; density comprised between 390 and 490 g/l.

**Patentansprüche**

1. Verfahren zur Herstellung einer wasserfreien Creme, die bei Raumtemperatur stabil ist, umfassend oder bestehend aus Käse und wasserfreiem Fett, umfassend die folgenden Schritte: A. Bereitstellen von Portionen einer Zubereitung, die gereiften oder halbgereiften gebackenen Käse oder deren Mischungen umfasst, B. Zerkleinern der vorgenannten Portionen der vorgenannten Zubereitung, C. Erhitzen des zerkleinerten Produkts aus Schritt B auf eine Temperatur zwischen 35 °C und 50 °C, vorzugsweise zwischen 36 °C und 48 °C, bis eine halbflüssige Masse mit einer Partikelgröße zwischen 14 μm und 100 μm, vorzugsweise zwischen 24 μm und 100 μm, erhalten wird, D. Durchführen mindestens einer Raffination der halbflüssigen Masse aus Schritt C und mindestens einer Zugabe eines zuvor geschmolzenen wasserfreien Fetts in Gesamtmengen zwischen 10 % und 49,5 %, vorzugsweise zwischen 15 % und 45 % in Gewichtsprozent, bezogen auf das Gesamtgewicht der Mischung, die das Fett und die zugeführte Zubereitung aus Schritt B, umfassend oder bestehend aus dem gebackenen Käse, umfasst, wobei beide Schritte C und D in einem Raffinationsbecken oder in einer Kugelmühle durchgeführt werden.

2. Verfahren nach Anspruch 1, wobei die Schritte C und D gemäß den folgenden Betriebsmodi durchgeführt werden: C das zerkleinerte Material aus Schritt B wird in das besagte Raffinationsbecken oder die besagte Kugelmühle zugeführt und gegebenenfalls auch ein Teil flüssigen Fetts oder zuvor geschmolzenen Fetts bei einer Temperatur zwischen 36 °C und 48 °C, und das besagte Material wird gemahlen, bis ein halbflüssiges Material mit einer Partikelgröße zwischen 14 μm und 100 μm, vorzugsweise zwischen 24 μm und 100 μm, erhalten wird, D-1 eine erste Raffination wird bei einer Temperatur im Bereich von Schritt C an dem halbflüssigen Material von Schritt C durchgeführt, D-2 das wasserfreie Fett in flüssiger oder zuvor geschmolzener Form wird teilweise oder vollständig zugegeben, bei einer Temperatur im Bereich der beiden vorhergehenden Schritte; D-3 ein zweiter Raffinationsschritt wird durchgeführt, bei einer Temperatur im Bereich der vorhergehenden Schritte; D-4 der verbleibende Teil des Fetts wird teilweise oder vollständig zugegeben, wenn das Fett in Schritt D2 teilweise zugegeben wurde; D-5 Fortfahren mit einem dritten Raffinationsschritt, falls die Schritte D6 und D-7 vorgesehen sind; oder Mischen, falls das gesamte verbleibende Fett in Schritt D4 zugegeben wird; D-6 falls das Fett in Schritt D-4 teilweise zugegeben wurde, wird der verbleibende Teil des Fetts vollständig zugegeben; D-7 Fortfahren mit einer vierten Raffination, falls Schritt D6 vorgesehen ist, D-8 die wasserfreie Creme wird entnommen.

3. Verfahren nach Anspruch 2, wobei die Schritte C und D in einem Raffinationsbecken durchgeführt werden, die fertige Creme eine Fettmenge zwischen 20 % und 35 % in Gewichtsprozent, bezogen auf das Gesamtgewicht der zu raffinierenden Mischung, aufweist, und das Verfahren die Schritte C, D1-D5 und D8 umfasst, wobei:

○ in Schritt C das zerkleinerte Produkt auf eine Temperatur zwischen 38 °C und 45 °C, vorzugsweise zwischen 39 °C und 43 °C, erhitzt und für eine Zeitdauer zwischen 40 und 90 Minuten, vorzugsweise 1 Stunde, unter Rühren gehalten wird, bis ein halbflüssiges Produkt oder eine Masse mit einer Partikelgröße zwischen 60 μm und 80 μm erhalten wird;

○ in Schritt D-1 das in Schritt C erhaltene Material bei der im Bereich von Schritt C liegenden Temperatur einer ersten Raffination für eine Zeitdauer zwischen 50 und 70 Minuten, vorzugsweise für etwa 1 Stunde, bei einem Druck zwischen 60 % und 90 %, vorzugsweise 70 % des maximalen Drucks des Raffinationsbeckens, unterzogen wird;

○ in Schritt D-2 das flüssige oder geschmolzene Fett teilweise dem halbflüssigen Material des vorhergehenden Schritts bei einer Temperatur im Bereich der vorhergehenden Schritte bei einem Druck zwischen 75 % und 90 %, vorzugsweise 80 % des maximalen Drucks, zugegeben wird;

○ in Schritt D-3 die Mischung aus Schritt D-2 einer zweiten Raffination unterzogen wird, die bei einer Temperatur im Bereich der vorhergehenden Schritte bei einem Druck zwischen 75 % und 90 % des maximalen Drucks für eine Zeitdauer zwischen 10 und 40 Minuten, vorzugsweise zwischen 15 und 30 Minuten, durchgeführt wird;

◦ in Schritt D-4 die verbleibende Menge an flüssigem oder geschmolzenem Fett, die nicht in Schritt D2 zugegeben wurde, vollständig bei einer Temperatur im Bereich der vorhergehenden Schritte und bei dem gleichen Druck wie in Schritt D-3 zugegeben wird;

◦ in Schritt D-5 mit einem Mischen bei einer Temperatur im Bereich der vorhergehenden Schritte und bei dem gleichen Druck wie im vorhergehenden Schritt fortgefahren wird.

4.  Verfahren nach Anspruch 2, wobei die Schritte C und D in einer Kugelmühle durchgeführt werden und die fertige Creme wasserfreies Fett in Mengen zwischen 25 % und 35 % umfasst, das Verfahren die Schritte C, D-1 - D-3 und D-8 umfasst, wobei:

◦ in Schritt C das zerkleinerte Material aus Schritt B bei einer Rührgeschwindigkeit zwischen 30 Hz und 40 Hz, bei einer Temperatur zwischen 37 °C und 45 °C, vorzugsweise zwischen 40 °C und 43 °C, für eine Zeitdauer zwischen 40 und 90 Minuten, vorzugsweise für etwa 1 Stunde, zugeführt wird, bis eine halbflüssige Masse mit einer Partikelgröße zwischen 24 µm und 26 µm erhalten wird;

◦ in Schritt D-1 die Raffination bei einer Temperatur im Bereich von Schritt C mit einer Rührgeschwindigkeit von 60 Hz für eine Zeitdauer zwischen 40 und 90 Minuten, vorzugsweise 60 Minuten, durchgeführt wird;

◦ in Schritt D-2 das gesamte wasserfreie Fett bei der Temperatur im Bereich der vorhergehenden Schritte und bei einer Rührgeschwindigkeit von 30 Hz zugegeben wird;

◦ in Schritt D-3 die Raffination bei der gleichen Temperatur wie die vorhergehenden Schritte bei einer Rührgeschwindigkeit von 60 Hz für eine Zeitdauer zwischen 10 und 20 Minuten durchgeführt wird, bis eine Creme mit einer Partikelgröße zwischen 18 µm und 20 µm erhalten wird.

5.  Verfahren nach Anspruch 2, wobei, wenn die Schritte C und D in einer Kugelmühle durchgeführt werden und die Creme zwischen 35 % und 45 % Gewichtsprozent wasserfreies Fett, bezogen auf das Gesamtgewicht, enthält, das Verfahren die Schritte C, D-1 - D-8 umfasst, wobei:

◦ in Schritt C ein Teil des Fetts zusätzlich zu dem zerkleinerten Material aus B zugegeben, auf eine Temperatur zwischen 37 °C und 45 °C, vorzugsweise auf eine Temperatur zwischen 39 °C und 43 °C, erhitzt und die Mischung bei einer Geschwindigkeit zwischen 30 Hz und 40 Hz unter Rühren gehalten wird, bis ein halbflüssiges Produkt oder eine Masse mit einer Partikelgröße zwischen 40 µm und 60 µm erhalten wird;

◦ in Schritt D-1 der erste Raffinationsschritt bei einer Temperatur im gleichen Bereich wie Schritt C bei einer Rührgeschwindigkeit zwischen 50 Hz und 70 Hz, vorzugsweise bei 60 Hz, für eine Zeitdauer zwischen 10 und 40 Minuten, vorzugsweise 30 Minuten, durchgeführt wird;

◦ in Schritt D-2 ein weiterer Teil des Fetts bei einer Temperatur im gleichen Bereich wie Schritt D1 und bei einer Geschwindigkeit zwischen 30 Hz und 40 Hz, vorzugsweise 30 Hz, zugegeben wird;

◦ in Schritt D-3 die zweite Raffination bei einer Temperatur im vorgenannten Bereich bei einer Rührgeschwindigkeit zwischen 50 Hz und 70 Hz, vorzugsweise bei 60 Hz, durchgeführt wird;

◦ in Schritt D-4 ein weiterer Teil des Fetts bei einer Temperatur im Bereich der vorhergehenden Schritte und bei einer Geschwindigkeit zwischen 30 Hz und 40 Hz, vorzugsweise 30 Hz, zugegeben wird;

◦ in Schritt D-5 die dritte Raffination bei einer Temperatur im Bereich der vorhergehenden Schritte durchgeführt und die Rührmischung bei einer Geschwindigkeit zwischen 50 Hz und 70 Hz, vorzugsweise 60 Hz, gehalten wird;

◦ in Schritt D-6 die letzte Portion des Fetts bei einer Temperatur im Bereich der vorhergehenden Schritte und bei einer Geschwindigkeit zwischen 30 Hz und 40 Hz, vorzugsweise 30 Hz, zugegeben wird;

◦ in Schritt D-7 mit der vierten Raffination bei einer Temperatur im Bereich der vorhergehenden Schritte und bei einer Geschwindigkeit zwischen 50 Hz und 70 Hz, vorzugsweise 60 Hz, für eine Zeitdauer zwischen 5 und 15 Minuten fortgefahren wird, bis eine Creme mit einer Partikelgröße zwischen 20 µm und 25 µm erhalten wird.

6.  Verfahren nach Anspruch 2 zur Herstellung einer Creme, die das wasserfreie Fett in einer Konzentration zwischen 20 % und 30 % enthält, wobei die Schritte C und D in einer Kugelmühle durchgeführt werden, umfassend die Schritte C, D-1, D-2, D-3, D-8, wobei

◦ in Schritt C das zerkleinerte Produkt aus Schritt B zugeführt und auf eine Temperatur zwischen 39 °C und 48 °C, vorzugsweise zwischen 41 °C und 45 °C, bei einer Rührgeschwindigkeit zwischen 30 Hz und 40 Hz für eine Zeitdauer zwischen 40 und 90 Minuten, vorzugsweise 60 Minuten, erhitzt wird, bis ein halbflüssiges Pro-

dukt mit einer Partikelgröße zwischen 24 µm und 26 µm erhalten wird;

◦ in Schritt D-1 die Raffination bei einer Temperatur im gleichen Bereich wie Schritt C und bei einer Geschwindigkeit zwischen 50 Hz und 70 Hz, vorzugsweise bei 60 Hz, für eine Zeitdauer zwischen 20 und 90 Minuten, vorzugsweise zwischen 30 und 60 Minuten, durchgeführt wird;

◦ Schritt D-2 die folgenden Betriebsschritte einschließt a) Zugabe von geschmolzenem oder flüssigem wasserfreiem Fett bei einer Temperatur im Bereich der vorhergehenden Schritte bei einer Geschwindigkeit zwischen 30 Hz und 40 Hz, vorzugsweise 30 Hz, b) Mischen bei einer Temperatur im Bereich des vorhergehenden Schritts bei einer Geschwindigkeit von 60 Hz; c) Zugabe von Buttermilchpulver bei einer Temperatur im Bereich der vorhergehenden Schritte bei einer Geschwindigkeit zwischen 30 Hz und 40 Hz, vorzugsweise 30 Hz; d) Mischen bei einer Temperatur im Bereich des vorhergehenden Schritts bei einer Geschwindigkeit von 60 Hz; e) Zugabe von Käsepulver bei einer Temperatur im Bereich der vorhergehenden Schritte bei einer Geschwindigkeit zwischen 30 Hz und 40 Hz, vorzugsweise 30 Hz;

◦ in Schritt D-3 wird die Raffination bei einer Temperatur im Bereich des vorhergehenden Schritts bei einer Geschwindigkeit von 60 Hz für eine Zeitdauer zwischen 10 und 30 Minuten, vorzugsweise 20 Minuten, durchgeführt, bis ein Produkt mit einer Partikelgröße zwischen 18 µm und 20 µm erhalten wird,

**7.** Verfahren nach einem der Ansprüche 1-6, wobei die Zubereitung von Schritt A umfasst oder besteht aus: i. gebackenem Käse, umfassend oder bestehend aus: gereiftem und/oder halbgereiftem Käse, Grana Padano, Parmigiano Reggiano, Cheddar und deren Mischungen, oder ii. gebackenem Käse, umfassend oder bestehend aus: gereiftem und/oder halbgereiftem Käse, Grana Padano, Parmigiano Reggiano, Cheddar, deren Mischungen, und mindestens einer der folgenden Komponenten, ausgewählt aus Getreidemehl, Stärken, Hülsenfruchtmehlen, Proteinextrudaten, vorzugsweise in Mengen zwischen 15 % und 25 % in Gewichtsprozent, bezogen auf das Gesamtgewicht der Zubereitung ii.

**8.** Verfahren nach Anspruch 7, wobei die Zubereitung ii. Maismehl als Getreidemehl enthält und vorzugsweise in Mengen zwischen 10 % und 25 % in Gewichtsprozent, bezogen auf das Gesamtgewicht der Zubereitung ii., vorhanden ist.

**9.** Verfahren nach einem der Ansprüche 1-8, wobei der in der Zubereitung von Schritt A verwendete gebackene Käse in Form von Flocken vorliegt. [Anmerkung des Übersetzers: Der Begriff "pods" wurde mit "Flocken" übersetzt. In der Beschreibung wird auf "crumble Groksi®" verwiesen, was auf knusprige, flockenartige Käsestücke hindeutet. "Chips" wäre eine Alternative, aber "Flocken" scheint dem zerkleinerten Zustand ("crumble") besser zu entsprechen.]

**10.** Verfahren nach einem der Ansprüche 1-9, wobei das nach dem Zerkleinerungsschritt B erhaltene Produkt eine Partikelgröße von weniger als 6 mm, vorzugsweise zwischen 3 mm und 6 mm, besonders bevorzugt zwischen 4 mm und 5 mm; eine Feuchtigkeit zwischen 1,5 % und 3,5 %; eine Wasseraktivität zwischen 0,20 und 0,40; eine Dichte zwischen 390 und 490 g/l aufweist.

**Revendications**

**1.** Procédé de préparation d'une crème anhydre qui est stable à température ambiante, comprenant ou consistant en du fromage et de la matière grasse anhydre, comprenant les étapes suivantes : A. fourniture de portions d'une préparation comprenant du fromage cuit affiné ou semi-affiné ou leurs mélanges, B. broyage desdites portions de ladite préparation, C. chauffage du produit broyé de l'étape B à une température comprise entre 35 °C et 50 °C, de préférence entre 36 °C et 48 °C, jusqu'à obtention d'une masse semi-liquide ayant une granulométrie comprise entre 14 µm et 100 µm, de préférence entre 24 µm et 100 µm, D. réalisation d'au moins un raffinage de la masse semi-liquide de l'étape C, et au moins un ajout d'une matière grasse anhydre préalablement fondue en des quantités totales comprises entre 10 % et 49,5 %, de préférence entre 15 % et 45 % en poids, par rapport au poids total du mélange comprenant la matière grasse et la préparation chargée de l'étape B comprenant ou consistant en le fromage cuit, dans lequel les deux étapes C et D sont réalisées dans une bassine de raffinage ou dans un broyeur à billes.

**2.** Procédé selon la revendication 1, dans lequel les étapes C et D sont réalisées selon les modes opératoires suivants : C le matériau broyé de l'étape B est chargé dans ladite bassine de raffinage ou ledit broyeur à billes et éventuellement aussi une partie de matière grasse liquide ou de matière grasse préalablement fondue à une température comprise entre 36 °C et 48 °C, et ledit matériau est broyé jusqu'à obtention d'un matériau semi-liquide ayant une granulométrie comprise entre 14 µm et 100 µm, de préférence entre 24 µm et 100 µm, D-1 un premier raffinage est effectué à une température comprise dans la plage de l'étape C, sur le matériau semi-liquide de l'étape C, D-2 la matière grasse anhydre sous forme liquide ou préalablement fondue est partiellement ou complètement ajoutée, à une température comprise dans la plage des deux étapes précédentes ; D-3 une deuxième étape de raffinage est effectuée, à une température comprise dans la plage des étapes précédentes ; D-4 la partie restante de matière grasse est partiellement ou complètement ajoutée, lorsque la matière grasse est partiellement ajoutée à l'étape D2 ; D-5 poursuite avec une troisième étape de raffinage, si les étapes D6 et D-7 sont envisagées ; ou mélange dans le cas où toute la matière grasse restante est ajoutée à l'étape D4 ; D-6 si la matière grasse a été partiellement ajoutée à l'étape D-4, la partie restante de matière grasse est complètement ajoutée ; D-7 poursuite avec un quatrième raffinage si l'étape D6 est envisagée, D-8 la crème anhydre est déchargée.

3. Procédé selon la revendication 2, dans lequel les étapes C et D sont réalisées dans une bassine de raffinage, la crème finale a une quantité de matière grasse comprise entre 20 % et 35 % en poids par rapport au poids total du mélange à raffiner, et le procédé comprend les étapes C, D1-D5 et D8, dans lequel :

   ○ à l'étape C, le produit broyé est chauffé à une température comprise entre 38 °C et 45 °C, de préférence entre 39 °C et 43 °C, et est maintenu sous agitation pendant une durée comprise entre 40 et 90 minutes, de préférence 1 heure, jusqu'à obtention d'un produit ou d'une masse semi-liquide avec une granulométrie comprise entre 60 μm et 80 μm ;
   ○ à l'étape D-1, le matériau obtenu à l'étape C à la température comprise dans la plage de l'étape C est soumis à un premier raffinage, pendant une durée comprise entre 50 et 70 minutes, de préférence pendant environ 1 heure, à une pression comprise entre 60 % et 90 %, de préférence 70 % de la pression maximale de la bassine de raffinage ;
   ○ à l'étape D-2, la matière grasse liquide ou fondue est partiellement ajoutée au matériau semi-liquide de l'étape précédente, à une température comprise dans la plage des étapes précédentes, à une pression comprise entre 75 % et 90 %, de préférence 80 % de la pression maximale ;
   ○ à l'étape D-3, le mélange de l'étape D-2 est soumis à un second raffinage, réalisé à une température comprise dans la plage des étapes précédentes à une pression comprise entre 75 % et 90 % de la pression maximale, pendant une durée comprise entre 10 et 40 minutes, de préférence comprise entre 15 et 30 minutes ;
   • à l'étape D-4, la quantité restante de matière grasse liquide ou fondue non ajoutée à l'étape D2 est ajoutée complètement, à une température comprise dans la plage des étapes précédentes, et à la même pression qu'à l'étape D-3 ;
   • à l'étape D-5, poursuite avec un mélange à une température comprise dans la plage des étapes précédentes, et à la même pression que l'étape précédente.

4. Procédé selon la revendication 2, dans lequel les étapes C et D sont réalisées dans un broyeur à billes et la crème finale comprend de la matière grasse anhydre en des quantités comprises entre 25 % et 35 %, le procédé comprend les étapes C, D-1 - D-3 et D-8, dans lequel:

   ○ à l'étape C, le matériau broyé de l'étape B est chargé à une vitesse d'agitation comprise entre 30 Hz et 40 Hz, à une température comprise entre 37 °C et 45 °C, de préférence entre 40 °C et 43 °C, pendant une durée comprise entre 40 et 90 minutes, de préférence pendant environ 1 heure, jusqu'à obtention d'une masse semi-liquide avec une granulométrie comprise entre 24 μm et 26 μm ;
   ○ à l'étape D-1, le raffinage est réalisé à une température comprise dans la plage de l'étape C, avec une vitesse d'agitation de 60 Hz, pendant une durée comprise entre 40 et 90 minutes, de préférence 60 minutes ;
   ○ à l'étape D-2, toute la matière grasse anhydre est ajoutée à la température comprise dans la plage des étapes précédentes, et à une vitesse d'agitation de 30 Hz ;
   ○ à l'étape D-3, le raffinage est réalisé à la même température que les étapes précédentes, à une vitesse d'agitation de 60 Hz, pendant une durée comprise entre 10 et 20 minutes, jusqu'à obtention d'une crème ayant une granulométrie comprise entre 18 μm et 20 μm.

5. Procédé selon la revendication 2, dans lequel, lorsque les étapes C et D sont réalisées dans un broyeur à billes et que la crème contient entre 35 % et 45 % en poids de matière grasse anhydre par rapport au poids total, le procédé comprend les étapes C, D-1 à D-8, dans lequel :

   ○ à l'étape C, une partie de matière grasse est ajoutée en plus du matériau broyé de B, chauffée à une température comprise entre 37 °C et 45 °C, de préférence à une température comprise entre 39 °C et 43 °C, et le mélange est maintenu sous agitation à une vitesse comprise entre 30 Hz et 40 Hz, jusqu'à obtention d'un produit ou d'une masse semi-liquide avec une granulométrie comprise entre 40 μm et 60 μm ;
   ○ à l'étape D-1, la première étape de raffinage est réalisée à une température comprise dans la même plage que l'étape C, à une vitesse d'agitation comprise entre 50 Hz et 70 Hz, de préférence à 60 Hz, pendant une durée comprise entre 10 et 40 minutes, de préférence 30 minutes ;

◦ à l'étape D-2, une partie supplémentaire de matière grasse est ajoutée à une température comprise dans la même plage que l'étape D1, et à une vitesse comprise entre 30 Hz et 40 Hz, de préférence 30 Hz ;

◦ à l'étape D-3, le second raffinage est réalisé à une température comprise dans la plage susmentionnée, à une vitesse d'agitation comprise entre 50 Hz et 70 Hz, de préférence à 60 Hz ;

◦ à l'étape D-4, une partie supplémentaire de matière grasse est ajoutée à une température comprise dans la plage des étapes précédentes, et à une vitesse comprise entre 30 Hz et 40 Hz, de préférence 30 Hz ;

◦ à l'étape D-5, le troisième raffinage est réalisé à une température comprise dans la plage des étapes précédentes, et le mélange agité est maintenu à une vitesse comprise entre 50 Hz et 70 Hz, de préférence 60 Hz ;

◦ à l'étape D-6, la dernière portion de matière grasse est ajoutée à une température comprise dans la plage des étapes précédentes, et à une vitesse comprise entre 30 Hz et 40 Hz, de préférence 30 Hz ;

◦ à l'étape D-7, poursuite avec le quatrième raffinage à une température comprise dans la plage des étapes précédentes, et à une vitesse comprise entre 50 Hz et 70 Hz, de préférence 60 Hz, pendant une durée comprise entre 5 et 15 minutes jusqu'à obtention d'une crème ayant une granulométrie comprise entre 20 $\mu$m et 25 $\mu$m.

6. Procédé selon la revendication 2, pour préparer une crème contenant la matière grasse anhydre à une concentration comprise entre 20 % et 30 %, les étapes C et D sont réalisées dans un broyeur à billes, comprenant les étapes C, D-1, D-2, D-3, D-8, dans lequel

◦ à l'étape C, le produit broyé de l'étape B est chargé et chauffé à une température comprise entre 39 °C et 48 °C, de préférence entre 41 °C et 45 °C, à une vitesse d'agitation comprise entre 30 Hz et 40 Hz, pendant une durée comprise entre 40 et 90 minutes, de préférence 60 minutes, jusqu'à obtention d'un produit semi-liquide avec une granulométrie comprise entre 24 $\mu$m et 26 $\mu$m ;

◦ à l'étape D-1, le raffinage est réalisé à une température comprise dans la même plage que l'étape C, et à une vitesse comprise entre 50 Hz et 70 Hz, de préférence à 60 Hz, pendant une durée comprise entre 20 et 90 minutes, de préférence entre 30 et 60 minutes ;

◦ l'étape D-2 inclut les étapes opératoires suivantes a) addition de matière grasse anhydre fondue ou liquide à une température comprise dans la plage des étapes précédentes à une vitesse comprise entre 30 Hz et 40 Hz, de préférence 30 Hz, b) mélange à une température comprise dans la plage de l'étape précédente, à une vitesse de 60 Hz ; c) addition de poudre de babeurre à une température comprise dans la plage des étapes précédentes, à une vitesse comprise entre 30 Hz et 40 Hz, de préférence 30 Hz, d) mélange à une température comprise dans la plage de l'étape précédente, à une vitesse de 60 Hz ; e) addition de poudre de fromage à une température comprise dans la plage des étapes précédentes, à une vitesse comprise entre 30 Hz et 40 Hz, de préférence 30 Hz,

◦ à l'étape D-3, le raffinage est réalisé à une température comprise dans la plage de l'étape précédente, à une vitesse de 60 Hz, pendant une durée comprise entre 10 et 30 minutes, de préférence 20 minutes, jusqu'à obtention d'un produit avec une granulométrie comprise entre 18 $\mu$m et 20 $\mu$m.

7. Procédé selon l'une quelconque des revendications 1 à 6, dans lequel la préparation de l'étape A comprend ou consiste en : i. fromage cuit comprenant ou consistant en : fromage affiné et/ou semi-affiné, Grana Padano, Parmigiano Reggiano, Cheddar et leurs mélanges, ou ii. fromage cuit comprenant ou consistant en : fromage affiné et/ou semi-affiné, Grana Padano, Parmigiano Reggiano, Cheddar, leurs mélanges, et au moins un des composants suivants choisis parmi la farine de céréales, les amidons, les farines de légumineuses, les extrudats de protéines, de préférence en des quantités comprises entre 15 % et 25 % en poids par rapport au poids total de la préparation ii.

8. Procédé selon la revendication 7, dans lequel la préparation ii contient de la farine de maïs en tant que farine de céréales et est de préférence présente en des quantités comprises entre 10 % et 25 % en poids par rapport au poids total de la préparation ii.

9. Procédé selon l'une quelconque des revendications 1 à 8, dans lequel le fromage cuit utilisé dans la préparation de l'étape A est sous la forme de pétales. [Note du traducteur : Le terme "pods" a été traduit par "pétales". Compte tenu du contexte des produits à base de fromage comme "Groksi®" mentionnés dans la description, qui sont souvent des snacks fins et croustillants ressemblant à des pétales, "pétales" est plus approprié qu'une traduction littérale comme "gousses".]

10. Procédé selon l'une quelconque des revendications 1 à 9, dans lequel le produit obtenu après l'étape de broyage B a une granulométrie inférieure à 6 mm, de préférence entre 3 mm et 6 mm, plus préférentiellement entre 4 mm et 5 mm ; une humidité comprise entre 1,5 % et 3,5 % ; une activité de l'eau comprise entre 0,20 et 0,40 ; une densité comprise entre 390 et 490 g/l.

**GROKSÌ CREAM (70 /30) 1/2 batch Refining machine 250 gr of Groksì cream**

| Groksì crumble 100% cheese | 175 kg | 70% |
|---|---|---|
| cocoa butter | 75 kg | 30% |

| | | kg | estimated time | start of step | end of step | product temp. ° C | H2O sleeve temp. ° C | set P | actual P | ventilation | Shear | size (µm) | |
|---|---|---|---|---|---|---|---|---|---|---|---|---|---|
| 1 | LOADING OF GROKSÌ CRUMBLE | 175 | | 12.00 | 13.00 | 40°C | 40 | | | X | X | | Groksì is loaded without having entered any pressure, but it is waited until the solid turns into a liquid cream; estimated time 1 hour. |
| 2 | state passage (solid-liquid) | | 1 h | 13.00 | 14.00 | | | | | X | X | | Wait for the Groksì to pass from solid to liquid |
| 3 | REFINING | | | 14.00 | | | | 70% | 83% | X | X | | 70% entry |
| 4 | 1st REFINING STEP | | 1 h | 15.00 | | 40.6 | 21 | | | X | X | 71 | 1st refining step ends with obj: 30 micron on the day of 22-09-21 |
| | | | 1 h | 16.00 | | | | 80% | 88% | X | X | 29 | |
| 5 | melted COCOA BUTTER (about 20%) | 20 | | 16.20 | | | | | | X | X | | |
| 6 | 2nd REFINING STEP | | 30' | 16.45 | | 41.8 | 31 | | 72% | X | X | 25 | 2nd refining step ends with obj: 20 micron on the day of 22-09-21 |
| | | | | 17.15 | | | | | | X | X | 18 | |
| 7 | melted COCOA BUTTER (about 80%) | 55 | | 17.15 | | | | | | X | | | |
| 8 | MIXING | | 10 | 17.25 | | | | | | | | | |
| 9 | TRANSFER | | | 17.30 | | | | | | | | | |

Figure 1

**GROKSÌ CREAM (70/30) 1/2 batch Refining machine 250 gr of Groksì cream**

| | Groksì crumble 100% | | |
|---|---|---|---|
| | cheese | 175 kg | |
| | palm oil | 75 kg | |

| | | QNT (kg) | estimated time | start of step | end of step | product temp. ° C | H2O sleeve temp. ° C | set P | actual P | ventilation | Shear | size (µm) | |
|---|---|---|---|---|---|---|---|---|---|---|---|---|---|
| 1 | LOADING OF GROKSÌ CRUMBLE | 175 | 1 h | 10.00 | 11.00 | 40 | 40 | | | X | X | | Groksì is loaded without having entered any pressure , but it is waited until the solid turns into a liquid cream;  estimated time 1 hour |
| 2 | state passage (solid-liquid) | | 1,5 h | 11.00 | 12.30 | 38 | 40 | | | X | X | | Wait for the Groksì to pass from solid to liquid |
| 3 | **1st REFINING STEP** | | 1,5 h | 12.30 | 14.00 | 40.6 | 24 | 70% | 73% | X | X | 50 | 1st refining step ends with obj: 30 micron |
| | | | 1 h | 14.00 | 15.00 | | | 80% | | X | X | 25 | |
| 4 | PALM OIL (about 20%) | 20 | | 15.20 | 15.30 | | | 80% | | X | X | | |
| 5 | **2nd REFINING STEP** | | 0,5 h | 15.30 | 16.00 | 41.8 | 31 | 80% | 72% | X | X | 21-23 | 2nd refining step ends with obj: 20 micron |
| | | | | 16.10 | | 40 | | 80% | | X | X | 16 | |
| 6 | PALM OIL (about 80%) | 55 | | 16.10 | 16.20 | | | 80% | | X | | | |
| 7 | MIXING | | 20 min | 16.20 | 16.40 | | | 80% | | | | | |
| 8 | TRANSFER | | | 16.40 | | | | | | | | | |

Figure 2

EP 4 543 213 B1

**GROKSÌ CREAM (70/30) Ball mill 10 kg of Groksì cream**

| Groksì crumble 100% cheese | 7 kg | 70% |
|---|---|---|
| cocoa butter | 3 kg | 30% |

| | | kg | estimated time | start of step | end of step | product temp. ° C | H2O sleeve temp. ° C | stirring assembly | size (μm) | |
|---|---|---|---|---|---|---|---|---|---|---|
| 1 | LOADING OF GROKSÌ CRUMBLE | 7 | 10' | 10.00 | 10:10 | 40-41 | 42 | 30-40 Hz | | Groksì is loaded at speeds of 30-40 Hz and it is waited until the solid turns into a liquid cream; estimated time 1 hour |
| 2 | state passage (solid-liquid) | | 1 h | 10:11 | 11:10 | 43 | 43 | 60 Hz | 26-24 | Wait for the Groksì to pass from solid to liquid |
| 3 | REFINING: | | | 11:10 | 11:40 | | | | | |
| | a) ADDITION OF MELTED COCOA BUTTER | 3 | 5'-10' | 11:15 | 11:20 | 45 | 43 | 30 Hz | | Addition of cocoa butter previously made liquid in a water bath (60 °C-70 °C) for about 1h |
| | b) MIXING | | | 11:20 | 11:40 | 45 | 43 | | | |
| 4 | REFINING PROCESS END | 10 | 10' | 11:40 | 11:40 | 45 | 43 | 60 Hz | 18-20 micron | Refining step ends if reached with obj: 18-20 micron. Otherwise, proceeding with refining for about 15'-20' |
| 5 | UNLOADING OF THE PRODUCT | 10 | 10' | 11:40 | 11:50 | 45 | 43 | 30 Hz | 18-20 micron | |

Figure 3

**GROKSÌ CREAM (70/30) Ball mill 10 kg of Groksì cream**

| Groksì crumble 100% cheese | 7 kg | 70% |
|---|---|---|
| anhydrous butter | 3 kg | 30% |

| | | kg | estimated time | start of step | end of step | product temp. ° C | H2O sleeve temp. ° C | stirring assembly | size (μm) | |
|---|---|---|---|---|---|---|---|---|---|---|
| 1 | LOADING OF GROKSÌ CRUMBLE | 7 | 10' | 10.00 | 10:10 | 40-41 | 42 | 30-40 Hz | | Groksì is loaded at speeds of 30-40 Hz and it is waited until the solid turns into a liquid cream; estimated time 1 hour |
| 2 | state passage (solid-liquid) | | 1 h | 10:11 | 11:10 | 43 | 43 | 60 Hz | 26-24 | Wait for the Groksì to pass from solid to liquid |
| 3 | REFINING: | | | 11:10 | 11:40 | | | | | |
| | a) ADDITION OF MELTED ANHYDROUS BUTTER | 3 | 5'-10' | 11:15 | 11:20 | 45 | 43 | 30 Hz | | Addition of anhydrous butter previously made liquid in a water bath (60 °C-70 °C) for about 1h |
| | b) MIXING | | | 11:20 | 11:40 | 45 | 43 | | | |
| 4 | REFINING PROCESS END | 10 | 10' | 11:40 | 11:40 | 45 | 43 | 60 Hz | 18-20 micron | Refining step ends if reached with obj: 18-20 micron. Otherwise, proceeding with refining for about 15'-20' |
| 5 | UNLOADING OF THE PRODUCT | 10 | 10' | 11:40 | 11:50 | 45 | 43 | 30 Hz | 18-20 micron | |

Figure 4

EP 4 543 213 B1

**GROKSÌ CREAM (60/40) Ball mill 7.5 kg of Groksì cream**

| crumble Groksì* (75% cheese + 25% corn flour) | 4.5 kg | 60% | *wafers consisting of 70% cheese and 25% corn flour, mixed after cooking. The wafer obtained is comparable in size and shape to the wafer made with cheese only |
|---|---|---|---|
| cocoa butter | 3 kg | 40% | |

| | | kg | estimated time | start of step | end of step | product temp. °C | H2O sleeve temp. °C | stirring assembly | size (µm) | |
|---|---|---|---|---|---|---|---|---|---|---|
| 1 | LOADING OF GROKSÌ CRUMBLE | 4.5 | 10' | 10.00 | 10:10 | 40-41 | 42 | 40-50 Hz | | Groksì is loaded at a speed of 30-40 Hz |
| | ADDITION OF MELTED COCOA BUTTER | 1 kg | 10' | 10:15 | 10:25 | 42 | 43 | 30-40 Hz | | As soon as the crumble loading step is finished, add cocoa butter previously made liquid in a water bath (60 °C-70 °C) for about 1 hour |
| 2 | 1st REFINING STEP | | 30' | 10:25 | 10:55 | 43 | 43 | 60 Hz | | Wait for the fat to mix well with the crumble |
| 3 | ADDITION OF MORE MELTED COCOA | 0.5 | 10' | 11:55 | 11:05 | | 43 | 30 Hz | | Addition of cocoa butter previously made liquid in a water bath (60 °C-70 °C) for about 1 hour |
| | 2nd REFINING STEP | | 60' | 11:05 | 12:05 | 43 | 43 | 60 Hz | 59 | |
| 4 | ADDITION OF MORE MELTED COCOA | 0.5 | 10' | 12:05 | 12:15 | | 43 | 30 Hz | | Addition of cocoa butter previously made liquid in a water bath (60 °C-70 °C) for about 1 hour |
| | 3rd REFINING STEP | | | | | | | 60 Hz | 35-40 | |
| 5 | ADDITION OF MORE MELTED COCOA | 0.5 | 10' | 12:25 | | | 43 | 43 | 30 Hz | | Addition of cocoa butter previously made liquid in a water bath (60 °C-70 °C) for about 1 hour |
| | 4th REFINING STEP | | 5' | 12:35 | 12:40 | | | 60 Hz | 25 | Refining step ends with obj: 20-25 micron |
| 6 | UNLOADING OF THE PRODUCT | | 10' | 12:40 | 12:50 | 43 | 43 | 30 Hz | 20-25 MICRON | |

## Figure 5

**GROKSÌ CREAM (63% crumble) Ball mill: 5 kg**

| | kg | % |
|---|---|---|
| Groksì crumble 100% cheese | 3,150 kg | 60% |
| vegetable fat (high oleic sunflower and cocoa butter) | 1.350 kg | 27% |
| buttermilk powder | 0.5 kg | 10% |
| cheese powder | 0.175 kg | 3.00% |

| | | kg | estimated time | start of step | end of step | product temp. ° C | H2O sleeve temp. ° C | stirring assembly | size (µm) | |
|---|---|---|---|---|---|---|---|---|---|---|
| 1 | LOADING OF GROKSÌ CRUMBLE | 3.15 | 10' | 10:00 | 10:10 | 42 | 40 | 30-40 Hz | | Groksì is loaded at speeds of 30-40 Hz and it is waited until the solid turns into a liquid cream; estimated time 1 hour |
| 2 | state passage (solid-liquid) | | 1 h | 10:11 | 11:10 | 42 | 40 | 60 Hz | 26-24 | Wait for the Groksì to pass from solid to liquid |
| 3 | REFINING: | | | 11:10 | 11:40 | 42 | 40 | | | Addition of vegetable fat previously made liquid in a water bath (60 °C-70 °C) for about 1 hour |
| | a) ADDITION OF MELTED VEGETABLE FAT | 1.35 | 5'-10' | 11:15 | 11:20 | 42 | 40 | 30 Hz | | |
| | b) MIXING | | | 11:20 | 11:40 | 42 | 40 | 60 Hz | | |
| 4 | ADDITION OF BUTTERMILK IN POWDER | 0.5 | 10' | 11:40 | 11:50 | 42 | 40 | 30 Hz | | |
| | mixing | | 10' | 11:50 | 12:00 | 42 | 40 | 60 Hz | 24-22 | |
| 5 | ADDITION OF CHEESE POWDER | 3 | 10' | 12:00 | 12:10 | 42 | 40 | 30 Hz | 24-22 | |
| | mixing | | | 12:10 | 12:30 | 42 | 40 | 60 Hz | | |
| 6 | REFINING PROCESS END | | | | 12:30 | 42 | 40 | 60 Hz | 18-20 micron | Refining step ends if reached with obj: 18-20 micron. Otherwise, proceeding with refining for about 15'-20' |
| 7 | UNLOADING OF THE PRODUCT | 10 | 10' | 12:30 | 12:40 | 42 | 40 | 30 Hz | 18-20 micron | |

## Figure 6

**GROKSÌ CREAM (51% crumble) Ball mill: 5 kg**

| | | |
|---|---|---|
| Groksì crumble 100% cheese | 2,550 Kg | 51% |
| vegetable fat (high oleic sunflower and cocoa butter) | 1,300 Kg | 26% |
| buttermilk powder | 0,4Kg | 8% |
| cheese powder | 0,750 Kg | 15,00% |

| | | kg | estimated time | start of step | end of step | product temp. °C | H2O sleeve temp. °C | stirring assembly | size (µm) | |
|---|---|---|---|---|---|---|---|---|---|---|
| 1 | LOADING OF GROKSÌ CRUMBLE | 3.15 | 10' | 10:00 | 10:10 | 45 | 43 | 30-40 Hz | | Groksì is loaded at speeds of 30-40 Hz and it is waited until the solid turns into a liquid cream; estimated time 1 hour |
| 2 | state passage (solid-liquid) | | 1 h | 10:11 | 11:10 | 45 | 43 | 60 Hz | 26-24 | Wait for the Groksì to pass from solid to liquid |
| 3 | **REFINING:** | | | 11:10 | 11:40 | 45 | 43 | | | |
| | a) ADDITION OF MELTED VEGETABLE FAT | 1.35 | 5'-10' | 11:15 | 11:20 | 45 | 43 | 30 Hz | | Addition of vegetable fat previously made liquid in a water bath (60 °C-70 °C) for about 1 hour |
| | b) MIXING | | | 11:20 | 11:40 | 45 | 43 | 60 Hz | | |
| 4 | ADDITION OF BUTTERMILK IN POWDER | 0,5 | 10' | 11:40 | 11:50 | 45 | 43 | 30 Hz | | |
| | mixing | | 10' | 11:50 | 12:00 | 45 | 43 | 60 Hz | 24-22 | |
| 5 | ADDITION OF CHEESE POWDER | 3 | 10' | 12:00 | 12:10 | 45 | 43 | 30 Hz | 24-22 | |
| | mixing | | | 12:10 | 12:30 | 45 | 43 | 60 Hz | | |
| 6 | REFINING PROCESS END | | | | 12:30 | 45 | 43 | 60 Hz | 18-20 micron | Refining step ends if reached with obj: 18-20 micron. Otherwise, proceeding with refining for about 15'-20' |
| 7 | UNLOADING OF THE PRODUCT | 10 | 10' | 12:30 | 12:40 | 45 | 43 | 30 Hz | 18-20 micron | |

Figure 7

EP 4 543 213 B1

**GROKSÌ CREAM (53% crumble) Ball mill: 5 kg**

| | | |
|---|---|---|
| Groksì crumble 100% cheese | 2.650 kg | 53% |
| vegetable fat (high oleic sunflower and cocoa butter) | 1.090 kg | 22% |
| buttermilk powder | 0.4 kg | 8% |
| cheese powder | 0.860 kg | 17% |

| | | kg | estimated time | start of step | end of step | product temp. ° C | H2O sleeve temp. ° C | stirring assembly | size (µm) | |
|---|---|---|---|---|---|---|---|---|---|---|
| 1 | LOADING OF GROKSÌ CRUMBLE | 3.15 | 10' | 10:00 | 10:10 | 42 | 40 | 30-40 Hz | | Groksì is loaded at speeds of 30-40 Hz and it is waited until the solid turns into a liquid cream; estimated time 1 hour |
| 2 | state passage (solid-liquid) | | 1 h | 10:11 | 11:10 | 42 | 40 | 60 Hz | 26-24 | Wait for the Groksì to pass from solid to liquid |
| 3 | **REFINING:** | | | 11:10 | 11:40 | 42 | 40 | | | |
| | a) ADDITION OF MELTED VEGETABLE FAT | 1.35 | 5'-10' | 11:15 | 11:20 | 42 | 40 | 30 Hz | | Addition of vegetable fat previously made liquid in a water bath (60 °C-70 °C) for about 1 hour |
| | b) MIXING | | | 11:20 | 11:40 | 42 | 40 | 60 Hz | | |
| 4 | ADDITION OF BUTTERMILK IN POWDER | 0,5 | 10' | 11:40 | 11:50 | 42 | 40 | 30 Hz | | |
| | mixing | | 10' | 11:50 | 12:00 | 42 | 40 | 60 Hz | 24-22 | |
| 5 | ADDITION OF CHEESE POWDER | 3 | 10' | 12:00 | 12:10 | 42 | 40 | 30 Hz | 24-22 | |
| | mixing | | | 12:10 | 12:30 | 42 | 40 | 60 Hz | | |
| 6 | REFINING PROCESS END | | | | 12:30 | 42 | 40 | 60 Hz | 18-20 micron | Refining step ends if reached with obj: 18-20 micron. Otherwise, proceeding with refining for about 15'-20' |
| 7 | UNLOADING OF THE PRODUCT | 10 | 10' | 12:30 | 12:40 | 42 | 40 | 30 Hz | 18-20 micron | |

## Figure 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015257 A

- EP 1614355 B1